# EUROPÄISCHE PATENTSCHRIFT

(11) **EP 3 107 706 B1**
(45) Veröffentlichungstag und Bekanntmachung des Hinweises auf die Patenterteilung: **16.10.2019**
(21) Anmeldenummer: 15705986.6
(22) Anmeldetag: 19.02.2015
(51) Int. Cl.: B29C 45/14

(54) **MEHRSCHICHTIGER FORMKÖRPER FÜR FAHRZEUGINNENAUSSTATTUNGEN SOWIE VERFAHREN ZUR HERSTELLUNG SOLCHER FORMKÖRPER**
MULTILAYERED MOULDED PART FOR VEHICLE INTERIORS AND ITS METHOD OF MANUFACTURING
CORPS MOULÉ MULTICOUCHE POUR ÉQUIPEMENT D'INTÉRIEUR DE VÉHICULE ET PROCÉDÉ POUR LA FABRICATION D'UN TEL CORPS

(30) Priorität: 19.02.2014 DE 102014203029; 18.03.2014 DE 102014003751
(43) Veröffentlichungstag der Anmeldung: 28.12.2016
(73) Patentinhaber: Shanghai Yanfeng Jinqiao Automotive Trim Systems Co., Ltd., Shanghai 201206 (CN)
(72) Erfinder: THIELHORN, Peter, 45479 Mühlheim an der Ruhr (DE); KASIKCI, Gürsel, 45470 Mühlheim a. d. Ruhr (DE); KLUSMEIER, Werner, 32312 Lübbecke (DE)
(74) Vertreter: Trinks, Ole
(86) Internationale Anmeldenummer: PCT/EP2015/053479
(87) Internationale Veröffentlichungsnummer: WO 2015/124660

(56) Entgegenhaltungen:
- EP-A1- 1 240 991
- EP-A1- 2 042 291
- EP-A2- 0 586 222
- WO-A1-03/014403
- DE-A1- 3 344 536
- DE-A1- 10 017 486
- DE-A1- 19 851 117
- DE-A1- 19 951 776
- GB-A- 977 975
- Aus Lederzentrum Unknown: "Anzeige Gerbung", , 6 February 2014 (2014-02-06), XP055592580, Retrieved from the Internet: URL:https://web.archive.org/web/2014020615 1728/https://www.lederzentrum.de/wiki/inde x.php/Gerbung [retrieved on 2019-05-28]

## Beschreibung

Die vorliegende Erfindung betrifft ein Verfahren zur Herstellung von mehrschichtigen Formkörpern gemäß dem unabhängigen Patentanspruch 1. Darüber hinaus bezieht sich die vorliegende Erfindung auf einen Formkörper, welcher durch das erfindungsgemäße Verfahren herstellbar ist.

Neben dem Design einer Fahrzeugkarosserie, welches zumeist als erstes in das Auge des Betrachters fällt, ist die Gestaltung des Fahrzeuginnenraumes ein wesentlicher Faktor der modernen Fahrzeugentwicklung. Hierbei wird nicht nur auf die Optik der einzelnen Elemente Wert gelegt; vielmehr spielt auch die Haptik und das Zusammenspiel zwischen Material, Form und Farben der Innenausstattung eine entscheidende Rolle. Hochwertige Fahrzeuginnenräume überzeugen vor allem durch ihr Design und erstklassig verarbeitete Materialien. Dabei gehören bspw. Lederausstattungen längst nicht mehr zum Premiumsegment, sondern finden sich zunehmend auch in Fahrzeugen des mittleren Preissegments wieder. Insbesondere natürliches Leder, als natürlicher Werkstoff stellt sehr hohe Anforderungen an den Verarbeitungsablauf. Dabei treten immer wieder Probleme beim sogenannten Kaschieren von Kunststoffteilen mit Leder auf. So kommt es häufig zu Schwierigkeiten bei der Positionierung der Nähte sowie bei der Verbindung des Ledermaterials mit dem vorwiegend weichen Kunststoffuntergrund.

Um eine schnelle und einfache Verbindung des Kunststoffuntergrunds mit dem Bezugsmaterial (z. B. Ledermaterial) zu erreichen, bietet sich das Hinterspritzen als Spritzgießsonderverfahren zur Herstellung mehrschichtiger Formkörper in einem Prozessschritt an. Das Hinterspritzverfahren wird zur Herstellung von Verbundbauteilen aus einem Bezugsmaterial (z. B. Leder) und einem Kunststoffträger verwendet, um eine kostengünstige Fertigung hochwertiger Bauteile zu ermöglichen.

Die Verarbeitung von Echtleder mit dem Hinterspritzverfahren ist hinlänglich bekannt. Die Kunststoffschmelze dringt nur dabei in das Leder ein und bildet so einen beständigen Verbund aus. Dennoch besteht bei bestimmten Bezugsmaterialien, wie beispielsweise Naturleder als natürlicher Werkstoff, noch Entwicklungsbedarf für das Hinterspritzverfahren. So wird es bei den aus dem Stand der Technik bekannten Lösungen als problematisch angesehen, dass zwar ein beständiger Verbund zwischen dem Kunststoffträger und dem Echtleder erzielt werden kann, das Leder jedoch zum Teil starken Zugbelastungen ausgesetzt ist, wodurch die Weichheit und die optisch sichtbare, charakteristische Narbung abnehmen. Durch die beim Hinterspritzprozess auftretenden, hohen Spritzdrücke verschließen die Hautporen und führen so, haptisch und visuell zu einer "Plastik" anmutenden Oberfläche. Aus der DE 100 17 486 A1 ist bekannt, ein Leder "wet white" also ein nicht beschichtetes Leder in einem Spritzprägeverfahren zu hinterspritzen. Hierbei ist nicht angegeben, ob das Leder im Rahmen des Gerbverfahrens gestreckt wurde oder nicht.

Auf Grundlage der oben genannten Problemstellung liegt der vorliegenden Erfindung die Aufgabe zugrunde, ein Verfahren zur Herstellung von mehrschichtigen Formkörpern anzugeben, welches auf wirtschaftliche Weise optisch und funktionell einwandfreie Kaschierungen von Kunststoffteilen mit Ledermaterialen ermöglicht.

Erfindungsgemäß wird diese Aufgabe durch das Verfahren gemäß dem unabhängigen Patentanspruch 1 gelöst.

Demnach betrifft die Erfindung insbesondere ein Verfahren zur Herstellung von mehrschichtigen Formkörpern, bei welchen eine Rückseite eines Ledermaterials mit einem Kunststoff hinerspritzt wird. Im Einzelnen wird nach dem erfindungsgemäßen Verfahren zunächst ein flaches, nicht zugerichtetes Ledermaterial bereitgestellt. Dabei handelt es sich bei dem nicht zugerichteten Ledermaterial um ein Lederprodukt, welches zwar gegerbt, jedoch weder gestreckt noch beschichtet wurde (z. B. Crustleder). In einem zweiten Schritt wird das flache, nicht zugerichtete Ledermaterial derart in ein Spritzguss-Formwerkzeug eingebracht, dass die Rückseite des Ledermaterials (auch Fleischseite genannt) in Richtung einer Spritzkammer des Spritzguss-Formwerkzeugs ausgerichtet ist. Schließlich wird das geschmolzene Kunststoffmaterial unter Druck in die Spritzkammer des Spritzguss-Formwerkzeugs eingebracht, sodass sich dieses mit der Rückseite des Ledermaterials verbinden kann, wobei das Ledermaterial durch den Spritzdruck an die Formflächen des Spritzguss-Formwerkzeugs gedrückt wird und sich somit an die Oberfläche des herzustellenden, mehrschichtigen Formkörpers anpasst.

Der Erfindung liegt die Erkenntnis zugrunde, dass durch den Verzicht auf ein Zurichten des gegerbten Ledermaterials vor dem Einlegen in das Spritzguss-Formwerkzeug im Wesentlichen keine Streckbelastung des Ledermaterials vor dem Einlegen in das Formwerkzeug erfolgt. Mit anderen Worten, es werden lediglich minimale Streckbelastungen in das Ledermaterial eingebracht, welche beim Einlegen (z.B. Einspannen) des Ledermaterials in das Spritzguss-Formwerkzeug unumgänglich sind. Dadurch wird gewährleistet, dass das Ledermaterial ausreichend dehnbar ist und eine ausreichende Dicke für den anschließenden Spritzguss-Formprozess aufweist.

Mit dem erfindungsgemäßen Verfahren ergibt sich eine Vielzahl von Vorteilen. So weist das nicht zugerichtete Ledermaterial eine Dehnbarkeit auf, welche ausreicht, um den hohen Spritzdrücken während des Hinterspritzvorganges zu wiederstehen, ohne dass eine wesentliche Veränderung der Oberfläche, insbesondere der charakteristischen Narbungen sowie der Lederoptik, auftritt. Da das Ledermaterial auch keine Farb- und Schutzbeschichtungen vor dem Hinterspritzprozess aufweist, stellen auch die hohen Temperaturen während des Hinterspritzvorganges kein Problem dar. Schließlich ist es durch das erfindungsgemäße Verfahren möglich, die gewünschten mehrschichtigen Formkörper mit nur wenigen, einfachen Arbeitsschritten herzustellen.

Für eine Vielzahl von Anwendungen im Automobilbereich ist eine Prägung der Oberfläche des Ledermaterials erwünscht. Deshalb ist erfindungsgemäß vorgesehen, dass während bzw. nach dem Einbringen des geschmolzenen Kunststoffmaterials eine Prägung in bzw. auf das Ledermaterial eingebracht wird. Hierzu kann das Spritzguss-Formwerkzeug zumindest eine bereichsweise strukturierte Formfläche aufweisen, welche als Prägefläche verwendet wird. Je nach Ausgestaltung des Spritzguss-Formwerkzeuges können das Oberteil und/oder das Unterteil des Formwerkzeugs mit einer derartig strukturierten Prägefläche ausgestaltet sein.

Alternativ ist es selbstverständlich auch denkbar, dass das Hinterspritzen ohne Prägung erfolgt, wobei es dann zweckmäßig ist, das dreidimensional geformte Lederformteil anschließend in einem separaten Fertigungsschritt mit der gewünschten Prägung zu versehen.

Vorteilhafte Weiterbildungen des erfindungsgemäßen Verfahrens sind in den Unteransprüchen angegeben.

So ist es in einer ersten Realisierung des erfindungsgemäßen Verfahrens vorgesehen, dass das Ledermaterial aus einem getrockneten Leder zugeschnitten wird, bevor dieses in das Spritzguss-Formwerkzeug eingebracht wird. Die Trocknung dient insbesondere der Vereinfachung des Zuschneidens des Ledermaterials, was entweder nach dem Hinterspritzen bzw. automatisch beim Hinterspritzen erfolgt.

Nach einer weiteren Ausführungsform des erfindungsgemäßen Verfahrens wird als Ledermaterial ein gegerbtes Leder bereitgestellt. Dabei können alle allgemein bekannten Lederarten verwendet werden. Insbesondere kommen übliche Automobil-, Bekleidungs-, Schuhleder und Spaltleder in Betracht. Es können metallsalzgegerbte (z. B. Chrom, Aluminium), wie auch metallsalzfreie Leder eingesetzt werden. Dabei ist es lediglich wichtig, dass das Ledermaterial, wie oben bereits erwähnt, vor dem Einbringen in das Spritzguss-Formwerkzeug nicht zugerichtet wird. Insbesondere wird das Ledermaterial gemäß einer bevorzugten Ausführungsvariante vor dem Einbringen in das Spritzguss-Formwerkzeug im Wesentlichen keiner Streckbearbeitung mit bleibender Dehnung unterzogen.

In einer vorteilhaften Weiterbildung des erfindungsgemäßen Verfahrens wird das Ledermaterial vor dem Einlegen in das Formwerkzeug befeuchtet. Diese Befeuchtung kann automatisch mit Wasser erfolgen. So kann die Befeuchtung des Ledermaterials beispielsweise mittels Wasserdampf während des Spritzgussvorganges erfolgen, wodurch gleichzeitig eine Kühlung des Ledermaterials während des Spritzvorgangs erzielt wird. Alternativ ist es jedoch auch vorstellbar, das Ledermaterial vor dem Einlegen in das Spritzguss-Formwerkzeug separat zu befeuchten. Dazu kann das Ledermaterial z. B. auf einem Transportband durch ein Wasserbad hindurchgeführt werden. Die Temperatur des Wassers zum Befeuchten kann zwischen 20° und 50°, vorzugsweise zwischen 30° und 40°, insbesondere etwa 35° betragen.

Wie oben bereits mehrmals erwähnt, wird das für das erfindungsgemäße Verfahren bereitgestellte Ledermaterial vor dem Einbringen in das Spritzguss-Formwerkzeug in seiner unbehandelten Form belassen. Mit anderen Worten, das Ledermaterial wird im Wesentlichen keiner Streckbelastung unterzogen und auch nicht mit einer Oberflächenfärbung versehen. Demensprechend ist es gemäß einem weiteren Aspekt des erfindungsgemäßen Verfahrens vorgesehen, dass die dem Kunststoff abgewandte Oberfläche des Ledermaterials, nach der Entnahme des Formkörpers aus dem Spritzguss-Formwerkzeug, mit einer Farblackierung versehen wird. Um die Haltbarkeit einer derartigen Farblackierung zu verlängern, kann es ferner vorgesehen sein, dass nach dem Aufbringen der Farblackierung eine weitere Schutzbeschichtung, insbesondere in Form eines Klarlacks auf die Farblackierung aufgebracht wird. Dabei können die Farblackierung und/oder die Schutzbeschichtung beispielsweise durch eine Sprühauftragung erfolgen. Dieser Sprühauftrag kann durch automatische Sprühapplikatoren und/oder manuelle Sprühpistolen, wie diese hinlänglich aus dem Stand der Technik bekannt sind, erfolgen.

Nach einer weiteren Umsetzung des erfindungsgemäßen Verfahrens wird die Rückseite des Ledermaterials, vor dem Einbringen des geschmolzenen Kunststoffmaterials, mit einer Sperrschicht, insbesondere einer Sperrfolie beschichtet, welche undurchlässig für das Kunststoffmaterial ist. Wie oben bereits angedeutet, kann es bei zu hohen Drücken bzw. Temperaturen während des Hinterspritzvorganges vorkommen, dass die Lederfasern teilweise irreversibel miteinander verkleben. Auch wenn ein derartiges Verkleben durch das erfindungsgemäße, im Wesentlichen unbehandelte Ledermaterial in den meisten Fällen verhindert wird, kann es dennoch zweckmäßig sein, eine Sperrfolie auf der Rückseite des Ledermaterials anzubringen. Insbesondere kann diese Sperrfolie z. B. dazu genutzt werden, Verbindungs- bzw. Ziernähte des Ledermaterials vor einem Durchdringen durch die Kunststoffschmelze zu schützen. Die als Sperrfolie ausgebildete Sperrschicht kann beispielsweise aus einem geschäumten Kunststoff, wie Polyolefin, vorzugsweise Polypropylen, ausgebildet sein. Dabei ist es insbesondere auch vorteilhaft, wenn die Sperrschicht als eine selbsttragende Struktur ausgebildet ist, welche bereits eine Form aufweist, die der Kontur des herzustellenden mehrschichtigen Formkörpers, wie beispielsweise einer Instrumententafel, entspricht. Durch die Ausbildung der Sperrschicht als selbsttragende Struktur, kann ein Verrutschen des Ledermaterials während des Hinterspritzungsprozesses auf ein Minimum reduziert werden.

Gemäß einer weiteren Ausführungsform des erfindungsgemäßen Verfahrens wird das geschmolzene Kunststoffmaterial mit einer Temperatur von 170°C bis 250°C in das Spritzguss-Formwerkzeug eingebracht. In einem derartigen Temperaturbereich wird gewährleistet, dass eine hinreichende Verbindung zwischen dem Kunststoffmaterial und dem Ledermaterial während des Hinterspritzprozesses entsteht. Gleichzeitig sind die Temperaturen gering genug, um eine Beschädigung der Lederfasern zu vermeiden.

Als Kunststoffmaterial wird vorzugsweise ein thermoplastischer Kunststoff, insbesondere Polyolefin, besonders bevorzugt Polypropylen, verwendet. Diese thermoplastischen Kunststoffe sind besonders langzeitbeständig und garantieren darüber hinaus die gewünschte Haptik des herzustellenden, mehrschichtigen Formkörpers. In diesem Zusammenhang sei erwähnt, dass je nach Härte des thermoplastischen Kunststoffs die Eindruckhärte des fertigen Formkörpers verändert werden kann. So wird es beispielsweise bevorzugt weiche thermoplastische Kunststoffe für die Produktion von Armlehnen zu verwenden, während bei der Herstellung von Instrumententafeln härtere thermoplastische Kunststoffe Einsatz finden.

Die vorliegende Erfindung betrifft ferner einen mehrschichtigen Formkörper, insbesondere ein Innenausstattungsteil für Fahrzeuge, welcher ein Kunststoffspritzteil aufweist, auf dem ein Ledermaterial angebracht ist. Der erfindungsgemäße mehrschichtige Formköper wird nach dem oben erwähnten, erfindungsgemäßen Verfahren hergestellt.

Gemäß einem weiteren Aspekt der vorliegenden Erfindung ist vorgesehen, dass das Innenausstattungsteil ein Echtledermaterial umfasst, das in einem Hinterspritzprozess mit einem Kunststoffmaterial hinterspritzt wird, wobei zeitlich nach dem Hinterspritzvorgang durch einen nachfolgenden Veredelungsprozess die Echtlederoberfläche veredelt wird und/oder durch einen nachfolgenden Lackierungsprozess die Echtlederoberfläche lackiert und damit geschützt wird.

Durch diese Verfahrenstechnik wird das Leder durch den Hinterspritzprozess nicht geschädigt oder nicht irreversibel geschädigt, da erst nach dem Hinterspritzprozess die Oberfläche des Echtledermaterials veredelt und/oder lackiert wird. Somit ist es erfindungsgemäß vorteilhaft möglich, dass auch nach der Durchführung der Hinterspritzung bzw. des Hinterspritzprozesses die Haptik des Leders bzw. des Ledermaterials und/oder die Narbung des Leders bzw. des Ledermaterials und/oder die Anmutung des Leders oder des Ledermaterials entweder erhalten bleibt oder aber durch die Durchführung des nachfolgenden Veredelungsprozesses hergestellt bzw. wieder hergestellt wird.

Das erfindungsgemäße Verfahren gemäß diesem weiteren Aspekt bietet zusätzlich noch den Vorteil, dass durch den nachfolgenden Veredelungsprozess des Leders bzw. Ledermaterials bzw. der Oberfläche des Leders bzw. Ledermaterials bzw. durch den nachfolgenden Lackierungsprozess des Leders bzw. Ledermaterials bzw. der Oberfläche des Leders bzw. Ledermaterials allgemeine Oberflächenfehler des Leders kaschiert und repariert werden können.

Erfindungsgemäß wird somit als für den Hinterspritzprozess verwendetes Material ein Ledermaterial bzw. ein Echtledermaterial verwendet, das zeitlich vor dem Hinterspritzvorgang noch nicht zugerichtet wurde und somit auch noch nicht lackiert wurde. Dies führt zu dem vorteilhaften Ergebnis, dass das Leder bzw. das Echtledermaterial dehnbarer ist. Erfindungsgemäß ist es daher von Vorteil, dass eine Schädigung der Oberfläche des Leders bzw. des Echtledermaterials durch den Spritzdruck und/oder durch hohe Temperaturen von beispielsweise ca. 170 °C bis ca. 250 °C normalerweise nicht auftritt. Gemäß der vorliegenden Erfindung wird die Oberfläche des Leders bzw. des Echtledermaterials nach dem Hinterspritzvorgang dem Veredelungsprozess unterzogen, d.h. typischerweise insbesondere lackiert.

Durch diese Vorgehensweise wird in vorteilhafter Weise die Schädigung von Lackschichten vermieden sowie der Erhalt der Narbungen und der Erhalt der Lederhaptik realisiert.

Das hinterspritzte Material bzw. hinterspritzte Kunststoffmaterial wird nachfolgend auch als der Träger des Innenausstattungsteils bzw. als der Formkörper des Innenausstattungsteils bzw. als das Substrat des Innenausstattungsteils bezeichnet. Der Träger bzw. der Formkörper bzw. das Substrat kann beispielsweise aus einem faserverstärkten oder gefüllten olefinischen Kunststoff bestehen und durch Spritzgießen gefertigt werden.

Das Innenausstattungsteil gemäß dem weiteren Aspekt der vorliegenden Erfindung wird vorzugsweise dadurch gefertigt, dass ein Formwerkzeug einen ersten Teil und einen zweiten Teil aufweist, wobei der erste und zweite Teil des Formwerkzeugs gemeinsam (bei geschlossenem Formwerkzeug) eine Kavität des Formwerkzeugs einschließen. Das Formwerkzeug kann neben einem geschlossenen Zustand auch einen geöffneten Zustand aufweisen, in dem der erste und zweite Teil des Formwerkzeugs typischerweise relativ zueinander beabstandet positioniert sind und das Formwerkzeug insbesondere eine Öffnung zum Einlegen des Echtledermaterials aufweist. Das Echtledermaterial wird beim erfindungsgemäßen Fertigungsverfahren des Innenausstattungsteils in einem ersten Schritt in das Formwerkzeug eingelegt, d.h. das Einlegen des Echtledermaterials erfolgt erfindungsgemäß bei geöffnetem Formwerkzeug, d.h. in einem Zustand, in dem der erste Teil und der zweite Teil des Formwerkzeugs voneinander zur Bildung der Öffnung beabstandet positioniert sind.

Nach dem Einlegen des Echtledermaterials in das Formwerkzeug wird dieses geschlossen, d.h. der erste und zweite Teil des Formwerkzeugs werden typischerweise aufeinander zu bewegt. In dieser Situation schließen die Teile des Formwerkzeugs typischerweise die Kavität derart ein, dass die Kavität gegenüber dem Äußeren des Formwerkzeugs dicht oder zumindest weitgehend dicht bezüglich des Austretens des zu hinterspritzenden Materials ist, wobei jedoch die Kavität durch das Echtledermaterial typischerweise nicht vollständig ausgefüllt ist. Mithin existiert beim in dieser Weise geschlossenen Formwerkzeug innerhalb der von den Teilen des Formwerkzeugs umschlossenen Kavität neben dem eingebrachten Echtledermaterial ein Teilvolumen der Kavität, welches im Verfahrensschritt des Hinterspritzens durch das hinterspritzte Material ausgefüllt wird. Typischerweise wird dabei das in die Kavität eingespritzte Material bzw. Kunststoffmaterial lediglich von einer Seite des Echtledermaterials aus eingespritzt (Einspritzseite der Kavität), so dass das Echtledermaterial durch das in die Kavität eingespritzte Material zur der Einspritzseite gegenüberliegenden Seite der Kavität gedrückt wird.

Vorzugsweise ist gemäß Ausführungsformen der Erfindung vorgesehen, dass das Echtledermaterial entweder als zweidimensionales Material bzw. als Halbzeug in das Formwerkzeug eingelegt wird oder aber bereits vor dem Einlegen in eine dreidimensionale Form gebracht wird, bzw. vorgeformt eingelegt wird.

Zur Herstellung des fertigen Innenausstattungsteils, insbesondere Verkleidungsteils, insbesondere Fahrzeugverkleidungsteils, wird das Ledermaterial mit einem Kunststoffträger bzw. mit dem Substrat verbunden.

Gemäß einem Aspekt der Erfindung ist es bevorzugt vorgesehen, dass alternativ verschiedene Hinterspritzungsmaterialien bzw. Kombinationen von Hinterspritzungsmaterialien zum Einsatz kommen. Gemäß einer ersten Ausführungsform handelt es sich bei dem Kunststoffträger um einen Polypropylen-Kunststoffträger, gegebenenfalls mit Füllstoffen oder Verstärkungsstoffen wie Fasern oder dergleichen, wobei der Kunststoffträger entweder vollständig geschäumt sein kann oder aber lediglich in Teilbereichen geschäumt und in anderen Teilbereichen nicht geschäumt vorliegen kann. Alternativ zum Einsatz eines Polypropylen-Kunststoffträgers kommt auch ein ABS-Material und oder ein PC-Material (ABS=Acrylnitrylbutadienstyrol, PC=Polycarbonat) in Frage.

Hierbei handelt es sich sowohl bei dem Trägermaterial des Formkörpers aus Polyproylen-Kunststoff bzw. bei dem Trägermaterial aus ABS-Kunststoff bzw. PC-Kunststoff um handelsübliche Kunststoffmaterialien, die beispielsweise mit bis zu 30% Glasfasern und oder mit bis zu 30% Talkum versehen sind, wobei beide Zusatzmaterialien theoretisch bis zu 50% zugesetzt sein können und wobei der eigentliche Kunststoffanteil (d.h. der Polyproylenanteil im Falle des Kunststoffträgers auf Polypropylenbasis bzw. der ABS/PC-Anteil für den Kunststoffträger auf ABS- und/oder PC-Basis) jedenfalls mindestens 50% beträgt.

Bei dem Substrat des erfindungsgemäßen Formkörpers handelt es sich vorzugsweise um ein schmelzeförmig verarbeitetes (d.h. in Form einer Schmelze verarbeitetes), thermoplastisches Material.

Vorzugsweise besteht das schmelzeförmig verarbeitete Material aus Polypropylen (PP), Acrylnitril/Butadien/Styrol (ABS), einem Gemisch aus ABS und Polycarbonat (PC), Polyamid (PA), einem thermoplastischen Elastomer (TPE) oder aus einem thermoplastischen Elastomer auf der Basis von Naturkautschuk und/oder Polypropylen (PP). Weiterhin besteht das schmelzeförmig verarbeitete Material vorzugsweise aus einer Mischung aus mindestens zwei dieser Werkstoffe.

Besonders bevorzugt weist das schmelzeförmig verarbeitete Material Füllstoffe auf. Beispielhafte Füllstoffe sind Talkum, Kreide sowie Wollastonit. Des Weiteren kann das schmelzeförmig verarbeitete Material Verstärkungsstoffe, wie z. B. Glasfasern, Naturfasern, Kohlenstofffasern oder textilartige Verstärkungen, wie z. B. Glasfasermatten oder Naturfasermatten aufweisen, um seine mechanische Stabilität zu erhöhen. Weiterhin bevorzugt werden dem schmelzeförmig verarbeiteten Material porenbildende, wie z. B. physikalische oder chemische Treibmittel oder gasbeladene Elastomerkugeln, beigemischt.

Das erfindungsgemäße Verfahren wird im Folgenden mit Bezug auf die in den Figuren dargestellte Ausführungsform näher erläutert.

Dabei zeigen:

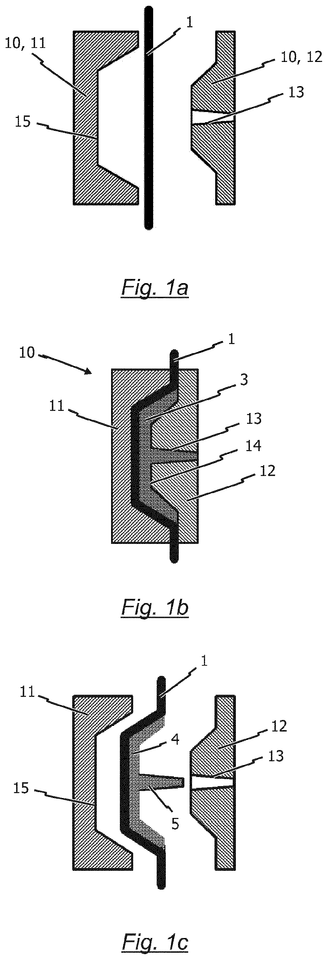

- Fig. 1a:: schematische Darstellung des Verfahrensschritts zum Einlegen des Ledermaterials in ein Spritzguss-Formwerkzeug gemäß einer ersten Ausführungsform;
- Fig. 1b:: schematische Ansicht des Hintersprizungsprozesses gemäß der ersten Ausführungsform; und
- Fig. 1c:: schematische Darstellung der Entnahme des mehrschichtigen Formkörpers aus dem Spritzguss-Formwerkzeug, nach dem Hinterspritzungsvorgang.

Den Figuren 1a bis 1c ist eine beispielhafte Ausführungsform des erfindungsgemäßen Verfahrens zur Herstellung eines mehrschichtigen Formkörpers zu entnehmen. Im Einzelnen kann aus der schematischen Darstellung gemäß Fig. 1a ein erster Verfahrensschritt erkannt werden, bei dem ein nicht zugerichtetes Ledermaterial 1 in das Innere eines Spritzguss-Formwerkzeugs 10 eingebracht wird. Das Ledermaterial ist zunächst insbesondere unbeschichtet und wurde vor dem Einbringen in das Formwerkzeug 10 keiner Streckbearbeitung mit bleibender Dehnung unterzogen. Es kann sich bei dem Ledermaterial beispielsweise um ein gegerbtes Naturleder handeln, welches vor dem Einbringen in das Spritzguss-Formwerkzeug 10 getrocknet und zugeschnitten wurde, sodass es ein passendes Ausmaß für den herzustellenden Formkörper, insbesondere die Fahrzeuginnenausstattung, aufweist.

Um das Einbringen des Ledermaterials 1 und eine mögliche vom Produkt geforderte Prägung des Ledermaterials 1 in das Spritzguss-Formwerkzeug 10 zu erleichtern, kann dieses ferner vor dem Einbringen leicht befeuchtet werden. Das Ledermaterial 1 wird nun derart in das Spritzguss-Formwerkzeug 10 eingebracht, dass die Rückseite des Ledermaterials 1 in Richtung der in der Fig. 1b dargestellten Spritzkammer 14 ausgerichtet ist. Die später für den Betrachter sichtbare Oberfläche des Ledermaterials 1 wird dagegen so eng wie möglich an die Formfläche 15 des Unterteils 11 des Formwerkzeuges 10 angebracht. Hierzu kann das Ledermaterial 1 beispielsweise von Hand an die Formfläche 15 angedrückt werden. Alternativ oder zusätzlich hierzu können Unterdruckkanäle (nicht dargestellt) innerhalb des Unterteils 11 vorgesehen sein, welche dazu dienen das Ledermaterial 1 eng an die Formfläche 15 anzusaugen.

Sobald das Ledermaterial 1, wie oben erwähnt, an der Formfläche 15 des Unterteils 11 angebracht wurde, wird der Oberteil 12 des Formwerkzeugs 10 geschlossen, wodurch ein Randbereich des Ledermaterials zwischen dem Oberteil und dem Unterteil des Spritzguss-Formwerkzeugs 10 eingeklemmt wird. Ferner ist aus der Fig. 1b zu erkennen, dass durch die Form der Ober- und Unterteile 11, 12 des Spritzguss-Formwerkzeugs 10 eine Spritzkammer 14 ausgebildet wird, welche an der Rückseite des Ledermaterials 1 angeordnet ist. Den Figuren 1a und 1b ist ferner zu entnehmen, dass das Oberteil 12 des Spritzguss-Formwerkzeugs 10 einen Einfüllkanal 13 aufweist, durch welchen in einem weiteren Schritt geschmolzenes Kunststoffmaterial 3 unter Druck in die Spritzkammer 14 eingebracht werden kann. Das insbesondere als thermoplastischer Kunststoff ausgebildete, geschmolzene Kunststoffmaterial 3 wird unter einem hohen Druck und Temperaturen zwischen 170°C und 250°C in die Spritzkammer 14 eingebracht, wodurch das Ledermaterial 1 gedehnt und vollständig auf die Formfläche 15 gepresst wird. Da das Ledermaterial 1 vor dem Einbringen in das Spritzguss-Formwerkzeug 10 nicht zugerichtet war, wird dessen Oberfläche auch durch die nun herrschende Druckbelastung nicht beschädigt.

Gemäß einer nicht speziell dargestellten Ausführungsvariante weist die Formfläche 15 zumindest bereichsweise eine Strukturierung auf, welche als Prägefläche verwendet werden kann. Demnach wird durch den Druck bereits während des Hinterspritzungsprozesses eine Prägung auf der Vorderseite des Ledermaterials erzeugt.

Nachdem das geschmolzene Kunststoffmaterial 3 abgekühlt ist, wird der mehrschichtige Formkörper aus dem Spritzguss-Formwerkzeug entnommen, wie dies beispielsweise der Fig. 1c zu entnehmen ist. Es ist zu erkennen, dass die Rückseite des nunmehr erstarrten Kunststoffteils 4 einen Fortsatz 5 aufweist, welcher einem Abbild des Einfüllkanals 13 des Formwerkzeuges 10 entspricht. Selbstverständlich wird dieser in einem separaten Arbeitsschritt vom Rest des Kunststoffteils 4 entfernt. Nachdem der mehrschichtige Formkörper aus dem Spritzguss-Formwerkzeug 10 entnommen wurde, kann dieser, wie oben bereits angedeutet, mit einer Farblackierung bzw. einer Schutzlackierung versehen werden (nicht dargestellt). Selbstverständlich sind auch weitere Verzierungen auf der Außenseite des Ledermaterials 1, nach der Entnahme des Formkörpers aus dem Formwerkzeug 10 vorstellbar.

Gemäß einer nicht dargestellten Ausführungsform, wird vor dem Einbringen des geschmolzenen Kunststoffmaterials 3 (Fig. 1b) eine Sperrschicht, insbesondere eine Sperrfolie, auf die Rückseite des Ledermaterials 1 aufgebracht, sodass das geschmolzene Kunststoffmaterial 3 zumindest bereichsweise nicht in Kontakt mit der Rückseite des Ledermaterials 1 tritt.

Die vorliegende Erfindung ist nicht auf die in den Figuren dargestellte Ausführungsform beschränkt, sondern ergibt sich aus einer Kombination sämtlicher hier offenbarter Merkmale.

### Bezugszeichenliste

- 1: Ledermaterial
- 3: geschmolzenes Kunststoffmaterial
- 4: erstarrtes Kunststoffteil
- 5: Fortsatz
- 10: Spritzguss-Formwerkzeug
- 11: Unterteil
- 12: Oberteil
- 13: Einfüllkanal
- 14: Spritzkammer
- 15: Formfläche

## Patentansprüche

1. Verfahren zur Herstellung von mehrschichtigen Formkörpern, insbesondere von Innenausstattungsteilen für Fahrzeuge, bei welchen eine Rückseite eines Ledermaterials (1) mit einem Kunststoff (4) hinterspritzt wird, wobei das Verfahren die folgenden Schritte aufweist:
- Bereitstellen eines flachen nicht zugerichteten Ledermaterials (1);
- Einbringen des bereitgestellten, nicht zugerichteten Ledermaterials (1) in ein Spritzguss-Formwerkzeug (10) derart, dass die Rückseite des Ledermaterials (1) in Richtung einer Spritzkammer (14) des Spritzguss-Formwerkzeugs (10) ausgerichtet ist, wobei anschließend ein geschmolzenes Kunststoffmaterial (3) unter Druck in die Spritzkammer (14) des Spritzguss-Formwerkzeugs (10) eingebracht und so ein mehrschichtiger Formkörper gebildet wird; und
- Entnehmen des gebildeten mehrschichtigen Formkörpers aus Kunststoff (4) und Ledermaterial (1) aus dem Spritzguss-Formwerkzeug (10),
wobei während des Einbringens des geschmolzenen Kunststoffmaterials (3) eine Prägung in bzw. auf das Ledermaterial (1) eingebracht wird,
wobei das im ersten Verfahrensschritt bereitgestellte Ledermaterial (1) ein Lederprodukt ist, welches zwar gegerbt, bislang jedoch weder gestreckt noch beschichtet wurde.

2. Verfahren nach Anspruch 1,
wobei erst nach der Entnahme des Formkörpers aus dem Spritzguss-Formwerkzeug (10) eine dem Kunststoff (4) abgewandte Oberfläche des Ledermaterials (1) mit einer Farblackierung versehen wird.

3. Verfahren nach Anspruch 2,
wobei nach dem Aufbringen der Farblackierung eine Schutzbeschichtung, insbesondere ein Klarlack, auf die Farblackierung aufgebracht wird.

4. Verfahren nach einem der Ansprüche 1 bis 3,
wobei vor dem Bereitstellen des Ledermaterials (1) im ersten Verfahrensschritt das Ledermaterial (1) aus einem getrockneten Leder zugeschnitten wird.

5. Verfahren nach einem der Ansprüche 1 bis 4,
wobei als Ledermaterial (1) ein gegerbtes Leder bereitgestellt wird.

6. Verfahren nach einem der Ansprüche 1 bis 5,
wobei das bereitgestellte Ledermaterial (1) vor dem Einbringen in das Spritzguss-Formwerkzeug (10) minimaler Streckbearbeitung mit bleibender Dehnung unterzogen wird.

7. Verfahren nach einem der Ansprüche 1 bis 6,
wobei das Ledermaterial (1) vor dem Einbringen in das Spritzguss-Formwerkzeug (10) befeuchtet wird.

8. Verfahren nach einem der Ansprüche 1 bis 7,
wobei vor dem Einbringen des geschmolzenen Kunststoffmaterials (3) die Rückseite des Ledermaterials (1) mit einer Sperrschicht, insbesondere einer Sperrfolie, beschichtet wird, welche undurchlässig für das Kunststoffmaterial ist.

9. Verfahren nach einem der Ansprüche 1 bis 8,
wobei das geschmolzene Kunststoffmaterial (3) mit einer Temperatur von 170°C bis 250°C in das Spritzguss-Formwerkzeug (10) eingebracht wird.

10. Verfahren nach einem der Ansprüche 1 bis 9,
wobei als Kunststoffmaterial ein thermoplastischer Kunststoff, vorzugsweise Polyolefine, insbesondere Polypropylen, verwendet wird.

## Claims

1. A method for manufacturing multilayered molded parts, in particular interior trim components for vehicles, in which a plastic (4) is injected into the reverse side of a leather material (1), wherein the method comprises the following steps:
- providing a flat non-dressed leather material (1);
- placing the provided non-dressed leather material (1) into an injection molding tool (10) such that the reverse side of the leather material (1) is aligned toward an injection chamber (14) of the injection molding tool (10), wherein a molten plastic material (3) is subsequently introduced into the injection chamber (14) of the injection molding tool (10) under pressure and a multilayered molded part thus formed; and
- removing the formed multilayered molded part of plastic (4) and leather material (1) from the injection molding tool (10),
wherein an embossing is introduced into or onto the leather material (1) while the molten plastic material (3) is being introduced,
wherein the leather material (1) provided in the first step of the method is a leather product which, although tanned, has not yet been stretched or coated.

2. The method according to claim 1,
wherein a surface of the leather material (1) opposite from the plastic (4) is not provided with a color finish until the molded part is removed from the injection molding tool (10).

3. The method according to claim 2,
wherein a protective coating, in particular a clearcoat, is applied to the color finish after application of said color finish.

4. The method according to one of claims 1 to 3,
wherein the leather material (1) is cut from dried leather prior to said leather material (1) being provided in the first step of the method.

5. The method according to one of claims 1 to 4,
wherein a tanned leather is provided as the leather material (1).

6. The method according to one of claims 1 to 5,
wherein prior to being placed into the injection molding tool (10), the provided leather material (1) undergoes minimal stretching with permanent elongation.

7. The method according to one of claims 1 to 6,
wherein the leather material (1) is moistened prior to being placed into the injection molding tool (10).

8. The method according to one of claims 1 to 7,
wherein prior to the molten plastic material (3) being introduced, the reverse side of the leather material (1) is coated with a barrier layer, in particular a barrier film, which is impervious to the plastic material.

9. The method according to one of claims 1 to 8,
wherein the molten plastic material (3) is introduced into the injection molding tool (10) at a temperature of 170°C to 250°C.

10. The method according to one of claims 1 to 9,
wherein a thermoplastic material, preferably polyolefin, in particular polypropylene, is used as the plastic material.

## Revendications

1. Procédé pour la fabrication de corps moulés multicouches, en particulier de pièces d'équipement intérieur pour véhicule, dans lequel une face postérieure d'un matériau à base de cuir (1) est enrobée par injection avec une matière plastique (4), ledit procédé comprenant les étapes suivantes consistant à :
- fournir un matériau à base de cuir (1) plat et non préparé ;
- introduction du matériau à base de cuir (1) fourni non préparé dans un outil de moulage par injection (10) de telle façon que la face postérieure du matériau à base de cuir (1) est orientée en direction d'une chambre de d'injection (14) de l'outil de moulage par injection (10), et un matériau à base de matière plastique en fusion est ensuite introduit sous pression dans la chambre d'injection (14) de l'outil de moulage par injection (10) et un corps moulé multicouches est ainsi formé ; et
- enlèvement du corps moulé multicouches formé de matière plastique (4) et de matériau à base de cuir (1) hors de l'outil de moulage par injection (10),
dans lequel pendant l'introduction de la matière plastique en fusion (3) une impression est appliquée dans ou respectivement sur le matériau à base de cuir (1), et le matériau à base de cuir (1) fourni dans la première étape du procédé est un produit à base de cuir qui a certes été tanné, mais qui n'a été jusqu'ici ni étiré ni revêtu.

2. Procédé selon la revendication 1,
dans lequel, uniquement après l'enlèvement du corps moulé hors de l'outil de moulage par injection (10), une surface du matériau à base de cuir (1) détournée de la matière plastique (4) est dotée d'une laque colorée.

3. Procédé selon la revendication 2,
dans lequel, après application de la laque colorée, on applique un revêtement protecteur, en particulier un vernis, sur la laque colorée.

4. Procédé selon l'une des revendications 1 à 3,
dans lequel, avant de fournir le matériau à base de cuir (1) dans la première étape du procédé, le matériau à base de cuir (1) est retaillé à partir d'un cuir séché.

5. Procédé selon l'une des revendications 1 à 4,
dans lequel on fournit un cuir tanné à titre de matériau à base de cuir (1).

6. Procédé selon l'une des revendications 1 à 5,
dans lequel le matériau à base de cuir fourni (1) est soumis, avant l'introduction dans l'outil de moulage par injection (10), à un traitement par étirage minimum avec un allongement persistant.

7. Procédé selon l'une des revendications 1 à 6,
dans lequel le matériau à base de cuir (1) est humidifié avant l'introduction dans l'outil de moulage par injection (10).

8. Procédé selon l'une des revendications 1 à 7,
dans lequel, avant l'introduction de la matière plastique en fusion (3), la face postérieure du matériau à base de cuir (1) est revêtue avec une couche barrière, en particulier un film barrière, qui est imperméable pour la matière plastique.

9. Procédé selon l'une des revendications 1 à 8,
dans lequel la matière plastique en fusion (3) est introduite dans l'outil de moulage par injection (10) avec une température de 170° C à 250° C.

10. Procédé selon l'une des revendications 1 à 9,
dans lequel on utilise à titre de matière plastique une matière thermoplastique, de préférence une polyoléfine et en particulier du polypropylène.
